# EUROPÄISCHE PATENTANMELDUNG

(11) **EP 0 842 813 A2**
(43) Veröffentlichungstag der Anmeldung: **20.05.1998**
(21) Anmeldenummer: 97118851.1
(22) Anmeldetag: 29.10.1997
(51) Int. Cl.: B60N 2/44

(54) **Autositzbezüge für mehrteilige Sitzbänke von PKWs**

(30) Priorität: 19.11.1996 DE 29620130 U
(71) Anmelder: Diana KFZ-Textil GmbH, 92657 Neustadt (DE)
(72) Erfinder: Angelika Unger,, 92660 Neustadt a. d. Waldnaab, (DE)
(74) Vertreter: Kern, Wolfgang, Dipl.-Ing.

(57) **Zusammenfassung**

Die Erfindung betrifft Autositzbezüge für mehrteilige Sitzbänke, insbesondere Rücksitze von PKWs, die mittels Reißverschlüssen miteinander verbindbar und auf den Polstern der Rücksitze anbringbar sind, bestehend aus zwei Lehnenteilen A, zwei Bankteilen B und optional mehreren Verlängerungsteilen C, D für die Lehnen- bzw. Bankteile.

Um in den Fällen, in denen für die Bezüge Verlängerungsteile verwendet werden, die mittels Reißverschlüssen im Bereich der Lehnen und Bänke mit den Bezügen für die Lehnen und Bänke verbunden werden, das Bild zweier einzeln bezogener Sitze bei zweiteiligen Rücksitzbänken zu erhalten, werden die einander zugewandten Seitenflächen der Lehnen bzw. deren Verlängerungen sowie der Sitze bzw. deren Verlängerungsteile durch separate Abspannteile abgedeckt, die somit zum integralen Bestandteil der Sitzbezüge werden.

## Beschreibung

Die Erfindung betrifft Autositzbezüge für mehrteilige Sitzbänke, insbesondere Rücksitze von PKWs, die mittels Reißverschlüssen mit ein ander verbindar und auf den Polstern der Rücksitze anbringar sind, bestehend aus zwei Lehnenteilen A, zwei Bankteilen B und optional mehreren verlängerungsteilen C, D für die Lehnen- bzw. Bankteile.

Die bekannten Sitzbezüge dieser Art sind so ausgebildet, daß sie für kleine Rücksitze über die Innenteile und Bankteile zu ziehen sind, um sich an deren Konturen anzupassen. Bei mittelgroßen Rücksitzen, deren Lehnen- und Bankteile also länger sind als bei kleinen Rücksitzen, verwendet man gewöhnlich für die genannten Teile Verlängerungsteile, die mittels Reißverschlüssen im Bereich der Lehnen und Bänke mit den Bezügen für die Lehnen bzw. Bänke verbunden werden. Entsprechend der Größe der Rücksitze lassen sich mehrere solcher Verlängerungsteile aneinanderreihen.

Um nun im all diesen Fällen das Bild zweier einzeln bezogener Sitze bei der zweiteiligen Rücksitzbank zu erhalten, wird erfindungsgemäß vorgeschlagen, die einander zugewandten Seiteflächen der Lehnen bzw. deren Verlängerungen und der Sitze bzw. deren Verlängerungsteile durch separate Abspannteile abzudecken, die somit zum integralen Bestandteil der Sitzbezüge werden.

Die Abspannteile werden mittels Reißverschlüssen an den Lehnenteilen bzw. deren Verlängerungsteilen und den Bankteilen bzw. deren Verlängerungsteilen befestigt, wobei die Ränder der Lehnenteile und der Bankteile bzw. deren Verlängerungsteile, die mit den Abspannteilen zu verbinden sind, mit letzteren gemeinsame Reißverschlußteile aufweisen

Auf diese Weise lassen sich die offenen Reißverschlußteile der bekanntenn Lehnen- bzw. Sitzteile und gegebenfalls deren Verlängerungen sauber mit den Abspannteilen abschließen, so daß, wie beabsichtigt, der Eindruck zweier einzeln bezogener Sitze entsteht, da dort, wo die beiden Sitze der geteilten bzw. mehrteiligen Rücksitzbank aneinanderstoßen, die gegenüberliegenden Seitenflächen der Lehnen und Sitze durch die Reißverschlüsse der Abspannteile eine markante Trennung erfahren.

Die Erfindung wird nachfolgend anhand der in der Zeichnung dargestellten Ausführungsbeispiele näher erläutert. In der Zeichnung zeigen:
- Fig. 1: eine schematische, perspektivische Darstellung eines zweiteiligen Rücksitzes jedoch mit vier Abspannteilen an den einander gegenüberliegenden Seitenflachen der beiden Lehnen und Bankteile des Rücksitzes,
- Fig. 2: eine schematische, perspektivische Ansicht des zweiteiligen Rücksitzes von Fig. 1, wobei der eine Bankteil zur Verdeutlichung seines Abspannteils weggenommen worden ist,
- Fig. 3: eine schematische, perspektivische Ansicht eines dreiteiligen Rücksitzes mit einem Verlängerungsteil, so daß ein mittelgroßer Rücksitz entsteht,
- Fig. 4: eine der Fig. 3 entsprechende Ansicht, wobei der Bankteil des rechten Sitzes zur Verdeutlichung seines Abspannteils abgebaut ist,
- Fig. 5: eine schematische Vorderansicht eines vierteiligen Rücksitzes mit zwei Verlängerungsteilen für Lehne und Sitzbank, so daß ein großer Rücksitz entsteht und
- Fig. 6: die der Fig. 5 entsprechende Ausführungsform, jedoch in schematischer, perspektivischer Darstellung, wobei der linke Bankteil zur Verdeutlichung seines Abspannteils ausgebaut ist.

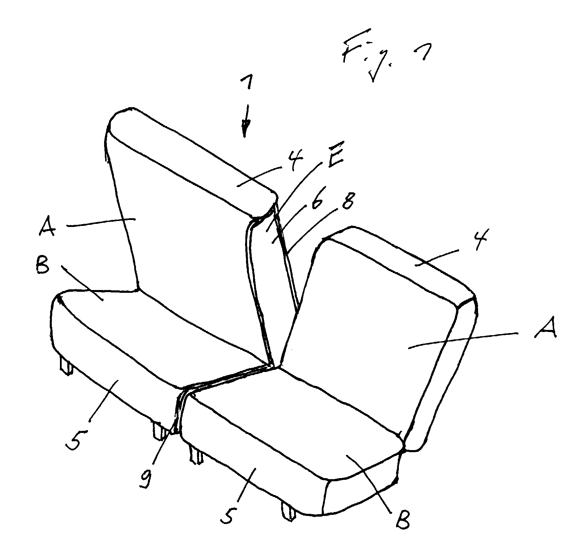

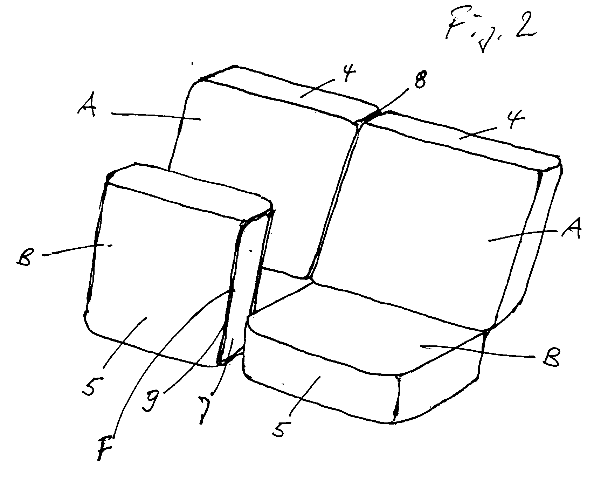

Der in Fig. 1 dargestellte "kleine" Rücksitz 1 ist zweiteilig und weist zwei Lehnen 4 und zwei Sitze 5 auf, die beide mit Sitzbezügen abgedeckt sind, wobei die Lehnenteile A und Bannteile B der Sitzbezüge an den einander gegenüberliegenden Seitenflächen 6, 7 mit je zwei separaten Abspannteilen E, F versehen sind, nämlich zwei für die beiden Lehnen 4 und zwei für die beiden Sitze 5, welche mittels Reißverschlußteilen 8, 9 mit den Lehnenteilen A bzw. Bankteilen B verbunden sind, wie auch aus Fig. 2 ersichtlich, wo der Abspannteil F der Seitenfläche 7 durch Wegnahme des Sitzes 5 verdeutlicht ist.

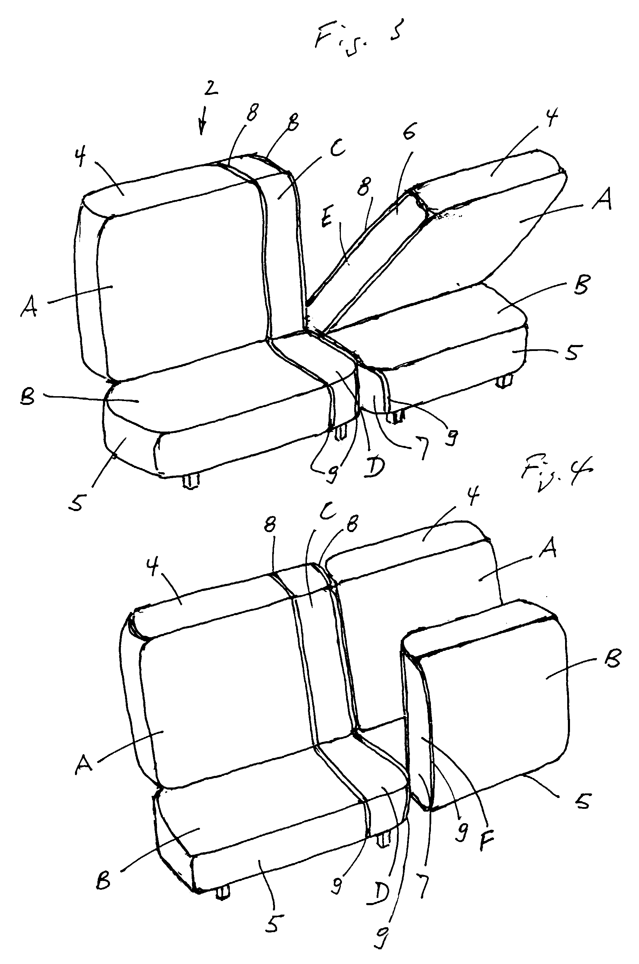

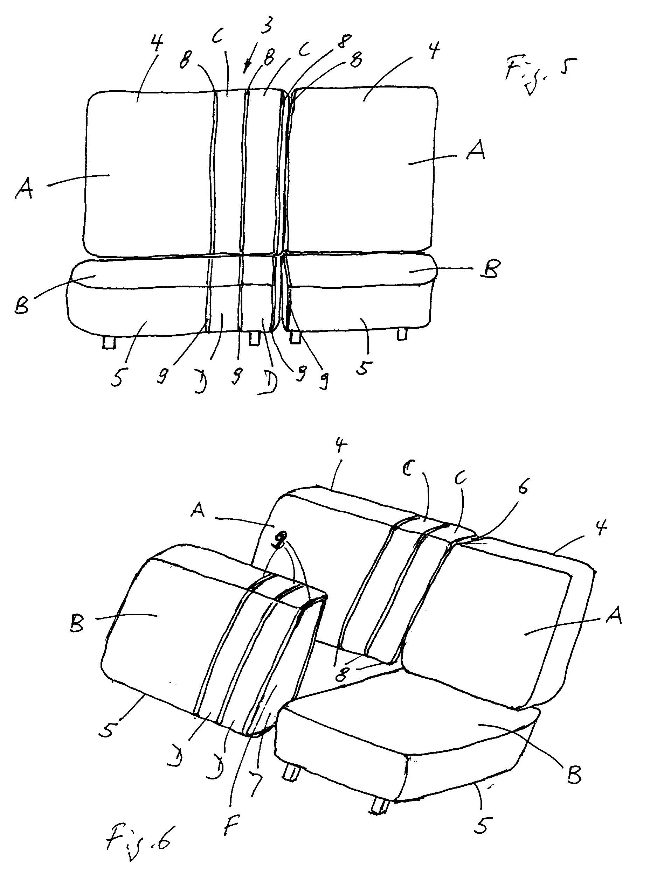

Die Figuren 3 und 4 zeigen einen mittelgroßen dreiteilige Rücksitz 2, der durch Anbau von Verlängerungsteilen C, D an die Lehnenteile A bzw. Bankteile B gegenüber der in den Figuren 1 und 2 gezeigten Ausführungsform vergrößert worden ist. Die Sitzbezüge sind durch Reißverschlußteile 8, 9 an die ursprünglichen Sitzbezüge angesetzt, und die einander gegenüberliegenden Seitenflächen 6, 7 der beiden Sitze, die den dreiteiligen Rücksitz bilden, sind wie bei der Ausführungsform in den Figuren 1 und 2 mittels separaten Abspannteilen E, F seitlich abgeschlossen worden, die ebenfalls durch Reißverschlußteile 8, 9 mit den offenenen Reißverschlußteilen der Sitzbezüge verbunden worden sind, wodurch ein sauberer Abschluß an den gegenüberliegeden Seitenflächen 6, 7 erreicht wird und der Rücksitz insgesamt, optisch gesehen, aus zwei einzeln bezogenen Sitzen bestehend in Erscheinung tritt.

Für einen noch größeren, nämlich vierteiligen Rücksitz 3, wie er schematisch in den Figuren 5 und 6 dargestellt ist, werden zwei weitere Verlängerungsteile C, D an die Lehnenteile A bzw. Bankteile B der Sitzbezüge angefügt, so daß die Rücksitzkonstruktion, was die Sitzbezüge anbelangt, durch die Verlängerungsteile variabel ist, also an unterschiedliche Rücksitzgrößen angepaßt werden kann, wobei in jedem Fall die verwendeten Abspannteile der Sitzbezüge, die mittels Reißverschlüssen 8, 9 seitlich angesetzt werden können, für einen sauberen Abschluß der Lehnenteile A und Bankteile B sorgen. Die verwendete Bezeichnung Sitzbezug schließt auch sogenannte Schonbezüge ein.

Die oben beschriebene Konstruktion wird daher treffend durch die Bezeichnung "Vario-Rücksitz Plus" verdeutlicht.

## Patentansprüche

1. Autositzbezüge für mehrteilige Sitzbänke, inbesondere Rücksitze von PKWs, die mittels Reißverschlüssen miteinander verbindbar und auf den Polstern der Rücksitze anbringbar sind, bestehend aus Bei Lehnenteilen A, zwei Bankteilen B und optional mehreren Verlängerungsteilen C, D für die Lehnen- bzw. Bankteile, **dadurch gekennzeichnet**, daß die einander zugewandten Seitenflächen (6, 7) der Lehnen (4) bzw. deren Verlängerungen und der Sitze (5) bzw. deren Verlängerungen durch separate Abspannteile E, F der Sitzbezüge abdeckbar sind.

2. Autositzbezüge nach Anspruch 1, **dadurch gekennzeichnet**, daß die Abspannteile E, F mittels Reißverschlüssen (8, 9) an den Lehnenteilen A bzw. deren Verlängerungsteilen C und den Bankteilen B bzw. deren Verlängerungsteilen D der Sitzbezüge befestigbar sind, wobei die Ränder der Lehnenteile A und der Bankteile B bzw. deren Verlängerungsteile C, D, die mit den Abspannteilen E, F zu verbinden sind, mit letzteren gemeinsame Reißverschlußteile (8, 9) aufweisen.

3. Schonbezüge nach Anspruch 1 oder 2, **dadurch gekennzeichnet**, daß die offenen Reißverschlußteile (8, 9) jedes Lehnenteils A und Bankteils B bzw. der sich in Abhängigkeit von der Größe der Rücksitze (1, 2, 3) an diese anschließenden Verlängerungsteile C, D mit den Reißverschlußteilen (8, 9) der Abspannteile E, F sauber abschließen, so daß der Rücksitz insgesamt, optisch gesehen, aus zwei einzeln bezogenen Sitzen zu bestehen scheint.
